# EUROPEAN PATENT APPLICATION

(11) **EP 4 632 095 A1**
(43) Date of publication of application: **15.10.2025**
(21) Application number: 23900247.0
(22) Date of filing: 24.08.2023
(51) Int. Cl.: C22C 38/00, C21D 1/18, C21D 9/00, C21D 9/46, C22C 18/00, C22C 18/04, C22C 21/00, C22C 30/06, C22C 38/60, C23C 2/02, C23C 2/06, C23C 2/26

(54) **PLATED STEEL SHEET**

(30) Priority: 09.12.2022 JP 2022197050
(71) Applicant: NIPPON STEEL CORPORATION, Chiyoda-ku Tokyo 100-8071 (JP)
(72) Inventor: MITSUNOBU, Takuya, Tokyo 100-8071 (JP); HAYASHIDA, Shota, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2023/030462
(87) International publication number: WO 2024/122120

(57) **Abstract**

Provided is a plated steel sheet comprising a base steel sheet and a plating layer formed on a surface of the base steel sheet, wherein the plating layer has a predetermined chemical composition, a depth with an area ratio of pearlite of 0 to 20% in a sheet thickness direction from an interface of the base steel sheet and the plating layer is 3 to 100 µm, an area ratio of pearlite with a circle equivalent diameter of 5 µm or more at a depth with an area ratio of pearlite of 0 to 20% is 0 to 30%, an amount of deposition of the plating layer is 20 g/m² or more per surface, and the plating layer has an oxide layer on its surface, and when the oxide layer is measured by XPS, a peak intensity ratio of (Al-O+Mg-O)/Zn-O is 3 or more.

## Description

### FIELD

The present invention relates to a plated steel sheet.

### BACKGROUND

Hot stamping (hot pressing) is known as a technique for press-forming a material, which is difficult to form, such as a high strength steel sheet. Hot stamping is a technique of hot forming which heats then forms a material to be formed. This technique heats then forms the material, and therefore at the time of forming, the steel material is soft and has good formability. Therefore, even a high strength steel material can be formed into a complex shape with a good precision. Further, it is hardened at the same time as being formed by the press dies, and therefore a formed steel material is known to have sufficient strength.

In relation to this, in the past, various plated steel sheets for hot stamping have been studied.

For example, PTL 1 describes galvanized steel sheet for hot stamping use provided with a base steel sheet and a plating layer provided at the surface of the base steel sheet, in which the base steel sheet contains, by mass%, C: 0.10 to 0.5%, Si: 0.7 to 2.5%, Mn: 1.0 to 3%, and Al: 0.01 to 0.5% and has a balance of iron and unavoidable impurities and the base steel sheet has inside it an internal oxidation layer having a thickness of 1 µm or more and containing oxides of at least one of Si and Mn and a decarburized layer having a thickness of 20 µm or less from the interface with the plating layer toward the inside direction of the base steel sheet. Further, PTL 1 teaches that by making the thickness of the internal oxidation layer of the base steel sheet 1 µm or more, it is possible to sufficiently suppress the occurrence of nonplating defects at the galvanized steel sheet and make the adhesion between the formed plating layer and base steel sheet sufficiently high. In addition, PTL 1 teaches that an internal oxidation layer is formed near the surface of the base steel sheet by high dew point annealing while on the other hand a decarburized layer is formed at the surface of the base steel sheet and near the surface by the high dew point annealing, in which, in the decarburized layer, the content of carbon is low, therefore the tensile strength becomes lower than the portion not decarburized, but if the thickness of the decarburized layer is 20 µm or less, it is possible to suppress the effect of the decarburized layer on the strength of the plated steel sheet and the hot-stamp formed body produced using the same.

PTL 2 describes steel sheet containing 2.0 to 24.0 wt% of zinc, 7.1 to 12.0 wt% of silicon, an optional 1.1 to 8.0 wt% of magnesium, an additional element selected from an optional Pb, Ni, Zr, or Hf, a content by weight of each additional element being lower than 0.3 wt%, and a balance of aluminum and any unavoidable impurities and residual elements, and covered by a metal coating with an Al/Zn ratio of more than 2.9 and teaches that a part obtained by hot-stamp forming the steel sheet exhibits high sacrificial corrosion.

PTL 3 describes a method of production of a hardened part comprising A) a step of providing a steel sheet coated in advance by a metal coating comprising 2.0 to 24.0 wt% of zinc, 1.1 to 7.0 wt% of silicon, and, when the amount of silicon is between 1.1 to 4.0 wt%, sometimes 1.1 to 8.0 wt% of magnesium and sometimes an additional element selected from Pb, Ni, Zr, or Hf, a content by weight of each additional element being less than 0.3 wt%, and a balance of aluminum and unavoidable impurities and residual elements, in which step, an Al/Zn ratio being more than 2.9, B) a step of cutting the coated steel sheet to obtain a blank, C) a step of heat treating the blank at 840 to 950°C temperature to obtain a completely austenite fine grain structure in the steel, D) a step of conveying the blank into a press tool, E) a step of hot forming the blank to obtain a part, and F) a step of obtaining in the steel a fine grain structure comprised of martensite or martensite-bainite or at least 75% of equiaxed ferrite, 5 to 20% of martensite, and 10% or less in amount of bainite by cooling the part obtained at step E). Further, PTL 3 teaches that according to the above method of production, a hardened part free of LME is obtained.

### [CITATIONS LIST]

### [PATENT LITERATURE]

[PTL 1] Japanese Unexamined Patent Publication No. 2019-151883
[PTL 2] Japanese Unexamined Patent Publication No. 2018-528324
[PTL 3] Japanese Unexamined Patent Publication No. 2018-527462

### SUMMARY

### [TECHNICAL PROBLEM]

For example, if using galvanized steel sheet such as described in PTLs 1 to 3 in hot-stamp forming, sometimes after the hot-stamp forming, the plating layer becomes alloyed with the base iron (base steel sheet) and the corrosion resistance falls. Further, the hot-stamp formed body obtained by hot-stamp forming galvanized steel sheet is then joined utilizing spot welding, etc., but at this time, it is necessary to suppress liquid metal embrittlement (LME) cracking. This phenomenon is the cracking occurring due to Zn converted to a liquid phase by the weld heat penetrating the inside of the steel material along the crystal grain boundaries and causing embrittlement and the tensile stress generated due to welding acting on those locations. In relation to this, PTL 3 teaches suppression of LME occurring at the time of hot-stamp forming, but PTL 3 does not necessarily sufficiently study this from the viewpoint of suppression of LME cracking at the time of spot welding after hot-stamp forming and realization of both suppression of the LME cracking and improvement of corrosion resistance.

Therefore, the present invention has as its object the provision of plated steel sheet able to maintain a high corrosion resistance even when applied to hot-stamp forming and suppress LME cracking at the time of spot welding after hot-stamp forming.

### [SOLUTION TO PROBLEM]

The inventors engaged in studies for achieving the above object and as a result discovered that by forming a plating layer containing Zn in a predetermined amount or more of deposition and further making the surface structure of the plating layer a suitable one, it is possible to maintain sufficient corrosion resistance even if used for hot-stamp forming and that by suitably modifying the structure of the surface layer part of the base steel sheet, even in a plating layer formed by such an amount of deposition, it is possible to remarkably suppress or reduce the occurrence of LME cracking at the time of spot welding after hot-stamp forming and thereby completed the present invention.

The present invention able to achieve the above object is as follows:
(1) A plated steel sheet comprising a base steel sheet and a plating layer formed on the surface of the base steel sheet, wherein
   the plating layer has a chemical composition comprising, by mass%,
   Al: 0.5 to 50.0%,
   Mg: 0.50 to 15.00%,
   Si: 0 to 4.0%, and
   Fe: 0 to 15.0%, further comprising at least one of
   Ni: 0 to 1.000%,
   Ca: 0 to 3.0%,
   Sb: 0 to 0.500%,
   Pb: 0 to 0.500%,
   Cu: 0 to 1.000%,
   Sn: 0 to 1.000%,
   Ti: 0 to 1.000%,
   Cr: 0 to 1.000%,
   Nb: 0 to 1.000%,
   Zr: 0 to 1.000%,
   Mn: 0 to 1.000%,
   Mo: 0 to 1.000%,
   Ag: 0 to 1.000%,
   Li: 0 to 1.000%,
   La: 0 to 0.500%,
   Ce: 0 to 0.500%,
   B: 0 to 0.500%,
   Y: 0 to 0.500%,
   Sr: 0 to 0.500%,
   In: 0 to 0.500%,
   Co: 0 to 0.500%,
   Bi: 0 to 0.500%,
   P: 0 to 0.500%, and
   W: 0 to 0.500%
   in a total of 5.000% or less, and
   balance: Zn and impurities,
   a depth with an area ratio of pearlite of 0 to 20% in a sheet thickness direction from an interface of the base steel sheet and the plating layer is 3 to 100 µm,
   an area ratio of pearlite with a circle equivalent diameter of 5 µm or more at a depth with an area ratio of pearlite of 0 to 20% is 0 to 30%,
   an amount of deposition of the plating layer is 20 g/m² or more per surface, and
   the plating layer has an oxide layer on its surface, and when the oxide layer is measured by XPS, a peak intensity ratio of (Al-O+Mg-O)/Zn-O is 3 or more,
   where Al-O, Mg-O, and Zn-O indicate intensities of peaks derived from Al-O, Mg-O, and Zn-O bonds, respectively.
(2) The plated steel sheet according to the above (1), wherein the depth with an area ratio of pearlite of 0 to 20% is 10 to 100 µm.
(3) The plated steel sheet according to the above (2), wherein the depth with an area ratio of pearlite of 0 to 20% is 30 to 100 µm.
(4) The plated steel sheet according to any one of the above (1) to (3), wherein the area ratio of pearlite with a circle equivalent diameter of 5 µm or more at a depth with an area ratio of pearlite of 0 to 20% is 0 to 15%.
(5) The plated steel sheet according to any one of the above (1) to (4), wherein the chemical composition comprises, by mass%, Al: 10.0 to 50.0% and Mg: 4.00 to 15.00%, and the peak intensity ratio of (Al-O+Mg-O)/Zn-O is 5 or more.
(6) The plated steel sheet according to the above (5), wherein the chemical composition comprises, by mass%, Al: 30.0 to 50.0% and Mg: 7.00 to 15.00%, and the peak intensity ratio of (Al-O+Mg-O)/Zn-O is 10 or more.

### [ADVANTAGEOUS EFFECTS OF INVENTION]

According to the present invention, it is possible to provide plated steel sheet able to maintain a high corrosion resistance even when applied to hot-stamp forming and suppress LME cracking at the time of spot welding after hot-stamp forming.

### DESCRIPTION OF EMBODIMENTS

### <Plated Steel Sheet>

The plated steel sheet according to an embodiment of the present invention comprises a base steel sheet and a plating layer formed on a surface of the base steel sheet, wherein
the plating layer has a chemical composition comprising, by mass%,
Al: 0.5 to 50.0%,
Mg: 0.50 to 15.00%,
Si: 0 to 4.0%, and
Fe: 0 to 15.0%,
further comprising at least one of
Ni: 0 to 1.000%,
Ca: 0 to 3.0%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%, and
W: 0 to 0.500% in a total of 5.000% or less, and
balance: Zn and impurities,
a depth with an area ratio of pearlite of 0 to 20% in a sheet thickness direction from an interface of the base steel sheet and the plating layer is 3 to 100 µm,
an area ratio of pearlite with a circle equivalent diameter of 5 µm or more at a depth with an area ratio of pearlite of 0 to 20% is 0 to 30%,
an amount of deposition of the plating layer is 20 g/m² or more per surface, and
the plating layer has an oxide layer on its surface, and when the oxide layer is measured by XPS, a peak intensity ratio of (Al-O+Mg-O)/Zn-O is 3 or more,
where Al-O, Mg-O, and Zn-O indicate intensities of peaks derived from Al-O, Mg-O, and Zn-O bonds, respectively.

As stated earlier, a hot-stamp formed body obtained by hot-stamp forming a galvanized steel sheet has to be kept down in liquid metal embrittlement (LME) cracking when joined by spot welding. The reason is not necessarily clear, but in research, etc., by the inventors, it was learned that the carbon contained in the steel material is an element promoting such LME cracking. Therefore, by reducing the carbon concentration of the surface layer part of a steel material where LME cracking occurs, for example, by decarburization, etc., it is believed possible to suppress or reduce the occurrence of LME cracking. However, in actuality, if used for hot-stamp forming, the effect of suppression of LME by lowering the concentration of carbon at the surface layer part of the steel material is limited and sometimes not necessarily satisfactory.

The inventors engaged in various studies and as a result discovered that from the viewpoint of improving the LME resistance, even if reducing the carbon concentration at the surface layer part of the base steel sheet decarburization, etc., at the time of the high temperature heating of hot-stamp forming, the carbon contained in the steel sheet diffuses into the steel surface layer part and that recarburization of the steel surface layer part causes the effect of suppression of LME by lowering the carbon concentration of the initial base steel sheet surface layer to be lost or reduced. Therefore, the inventors engaged in further studies and discovered that by forming a structure enabling suppression of such recarburization at the surface layer part of the base steel sheet, sufficient corrosion resistance can be maintained by sufficiently obtaining the effect of suppression of LME by lowering the carbon concentration of the initial base steel sheet surface layer part even when including a Zn-containing plating layer in a predetermined amount of deposition and reliably suppressing or reducing the occurrence of LME cracking at the time of spot welding after the hot-stamp forming. More specifically, as explained in detail later in relation to the method of production of a hot-stamp formed body, the inventors discovered that by forming a predetermined oxide layer on the surface of the plating layer and making the amount of deposition of the plating layer 20 g/m² or more per surface, even at the time of the high temperature heating of hot-stamp forming, evaporation of Zn and/or Mg is suppressed or reduced and sufficient corrosion resistance is maintained and that by forming a structure with a depth with an area ratio of pearlite of 0 to 20% in the sheet thickness direction from the interface of the base steel sheet and plating layer of 3 to 100 µm and with an area ratio of pearlite with a circle equivalent diameter of 5 µm or more at the depth with an area ratio of pearlite of 0 to 20% controlled to 0 to 30% at the surface layer part of the base steel sheet, it is possible to reliably suppress or reduce LME cracking at the time of spot welding after hot-stamp forming.

While not intending to be bound by any specific theory, in the plated steel sheet according to an embodiment of the present invention, it is believed that the structure at the surface layer part of the base steel sheet acts in the following way to suppress or reduce the diffusion of carbon contained in the base steel sheet to the steel surface layer part causing recarburization at the time of the high temperature heating in the hot-stamp forming. Explaining this in more detail, if the carbon concentration at the surface layer part of the base steel sheet is reduced by decarburization, etc., along with such lowering of the carbon concentration, the amount of pearlite formed in the microstructure at the surface layer part of the base steel sheet becomes relatively smaller. Here, in the plated steel sheet according to an embodiment of the present invention, first, it is important to lower the carbon concentration of the surface layer part of the base steel sheet by decarburization, etc., so that the depth at which the area ratio of pearlite becomes 0 to 20% in the sheet thickness direction from the interface of the base steel sheet and plating layer, i.e., the depth of a region with a relatively low area ratio of pearlite, becomes 3 to 100 µm. Due to this, the effect of suppression of LME due to lowering the carbon concentration becomes able to be sufficiently obtained. However, with just reducing the area ratio of pearlite to within a predetermined range, if such pearlite precipitates along the grain boundaries, at the time of the high temperature heating in the hot-stamp forming, it is believed the pearlite transforms to austenite and routes for diffusion of carbon due to the austenite running along the grain boundaries (i.e., routes for recarburization by carbon) are formed. At the time of the high temperature heating of hot-stamp forming, the carbon in the bulk tries to diffuse to the surface side due to the gradient in concentration between the high carbon concentration of the bulk in the base steel sheet and the low carbon concentration of the surface side. At that time, if there are recarburization routes for carbon due to the austenite running along the grain boundaries such as explained above, the carbon in the bulk will pass through the recarburization routes and diffuse to the surface side whereby recarburization of the steel surface layer part will be promoted. As a result, it becomes no longer possible to sufficiently obtain the effects of suppression of LME due to lowering the carbon concentration at the initial base steel sheet surface part. As opposed to this, according to the plated steel sheet according to an embodiment of the present invention, by controlling the area ratio of pearlite with a circle equivalent diameter of 5 µm or more in the above depth region with a relatively low area ratio of pearlite to a range of 0 to 30% to reduce the relatively large amount of pearlite, it is possible to make the austenite transformed from the pearlite diffuse on the grain boundaries even at the time of the high temperature heating of hot-stamp forming and thereby reliably cut off the routes for recarburization of carbon due to the austenite.

Explained in more detail, if pearlite transforms to austenite at the time of the high temperature heating of hot-stamp forming, a dual phase structure of ferrite and austenite is formed. In such a case, the austenite present at the interfaces of the different phases of the ferrite and austenite forms strings leading to the surface side of the base steel sheet whereby routes for recarburization of carbon are formed. As a result, diffusion of carbon from the bulk of the base steel sheet to the surface side becomes promoted. In relation to this, in the plated steel sheet according to an embodiment of the present invention, it is important to reduce the pearlite at the surface layer part of the base steel sheet, i.e., in the depth region of 3 to 100 µm in the sheet thickness direction from the interface of the base steel sheet and plating layer, to an area ratio of 0 to 20% and to limit the relatively coarse pearlite at that depth region, i.e., the pearlite with a circle equivalent diameter of 5 µm or more, to a range of, by area ratio, 0 to 30%. Due to such a surface layer part structure, even at the time of the high temperature heating of hot-stamp forming, it is possible to reduce the amount of austenite transformed from pearlite and further it is possible to make the austenite diffuse on the grain boundaries, therefore it is possible to reliably cut off the routes for recarburization of carbon due to the austenite. Therefore, according to the plated steel sheet according to the present invention, despite making the amount of deposition of the Zn-containing plating layer relatively greater so as to maintain a sufficient corrosion resistance and thereby resulting in conditions making LME easier to occur, by remarkably suppressing the recarburization at the time of the high temperature heating of hot-stamp forming, it becomes possible to sufficiently obtain the effects of suppression of LME due to lowering the carbon concentration at the initial base steel sheet surface part and reliably suppress or reduce the occurrence of LME cracking as explained above at the time of later spot welding. The fact that in plated steel sheet provided with a Zn-containing plating layer, it is possible to suppress or reduce the occurrence of LME cracking as explained above by suitably modifying the surface layer part structure of the base steel sheet was first clarified by the present inventors. Therefore, the plated steel sheet according to an embodiment of the present invention is particularly useful in use in the automotive field in which spot welding is relatively often used.

Below, the plated steel sheet according to an embodiment of the present invention will be explained in more detail. In the following explanation, the "%" of the units of contents of the elements, unless otherwise indicated, means "mass%". Further, in this Description, the "to" showing a numerical range, unless otherwise indicated, is used in the sense of the numerical values described before and after the same being included as the lower limit value and the upper limit value.

### [Plating Layer]

According to an embodiment of the present invention, a plating layer is formed on the surface of the base steel sheet. For example, it is formed on at least one of the surfaces, preferably both, of the base steel sheet. The plating layer has the following chemical composition.

### [Al: 0.5 to 50.0%]

Al is an element effective for improving the corrosion resistance of the plating layer. To sufficiently obtain such an effect, the Al content is 0.5% or more. The Al content may also be 1.0% or more, 3.0% or more, 5.0% or more, 8.0% or more, 10.0% or more, 15.0% or more, or 20.0% or more. On the other hand, if excessively containing Al, the amount of Zn required for imparting sacrificial corrosion resistance falls. Therefore, the Al content is 50.0% or less. The Al content may also be 45.0% or less, 40.0% or less, 35.0% or less, or 30.0% or less.

### [Mg: 0.50 to 15.00%]

Mg is an element effective for improving the corrosion resistance of the plating layer. To sufficiently obtain such an effect, the Mg content is 0.50% or more. The Mg content may also be 0.51% or more, 0.52% or more, 0.53% or more, 0.55% or more, 0.60% or more, 0.80% or more, 1.00% or more, 1.50% or more, 2.00% or more, or 3.00% or more. On the other hand, if excessively containing Mg, due to an excessive sacrificial corrosion prevention action, sometimes paint blisters and rust streaks occurs. Therefore, the Mg content is 15.00% or less. The Mg content may also be 12.00% or less, 10.00% or less, 9.00% or less, 8.00% or less, 7.00% or less, 6.00% or less, or 5.00% or less.

### [Si: 0 to 4.0%]

Si is an element effective for improving the corrosion resistance of the plating layer, the Si content may also be 0%, but in accordance with need, Si may also be contained in the plating layer in an amount of 0.01% or more, 0.05% or more, 0.1% or more, 0.5% or more, 1.0% or more, 1.5% or more, or 2.0% or more. On the other hand, from the viewpoint of improvement of the plating adhesion of the plating layer, the Si content may also be 4.0% or less. The Si content may also be 3.5% or less, 3.0% or less, 2.7% or less, or 2.5% or less.

### [Fe: 0 to 15.0%]

Fe is, for example, an element eluted from the base steel sheet into the plating bath or reacting with the Al at the time of plating to thereby form an Fe-Al barrier layer at the interface of the base steel sheet and plating layer and thereby can be contained in the plating layer. The Fe content may also be 0%, but if containing Fe, the Fe content may also be 0.01% or more, 0.05% or more, 0.1% or more, 0.2% or more, 0.3% or more, 0.4% or more, or 0.5% or more. On the other hand, sometimes Fe is contained in the plating layer up to 15.0% or so, but if this range, there are no disadvantageous effects on the plated steel sheet according to the embodiment of the present invention. Therefore, the Fe content is 15.0% or less. For example, it may also be 12.0% or less, 10.0% or less, 8.0% or less, 5.0% or less, 3.0% or less, 1.0% or less, or 0.8% or less.

Further, the plating layer may optionally contain at least one type of element among Ni: 0 to 1.000%, Ca: 0 to 3.0%, Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, and W: 0 to 0.500%. These optional elements are not particularly limited, but preferably total 5.000% or less. The optional elements may also be, in total, 4.500% or less, 4.000% or less, 3.500% or less, 3.000% or less, 2.500% or less, 2.000% or less, 1.500% or less, or 1.000% or less. Below, these optional elements will be explained in detail.

### [Ni: 0 to 1.000%]

Ni is an element effective for improving the corrosion resistance of the plating layer. The Ni content may also be 0%, but to obtain such an effect, the Ni content is preferably 0.0001% or more. The Ni content may also be 0.0004% or more, 0.001% or more, 0.005% or more, 0.010% or more, or 0.020% or more. The upper limit is not particularly prescribed, but from the viewpoint of the production costs, etc., the Ni content is 1.000% or less. For example, it may also be 0.980% or less, 0.950% or less, 0.900% or less, 0.700% or less, 0.500% or less, 0.400% or less, 0.300% or less, or 0.100% or less.

### [Ca: 0 to 3.0%]

Ca is an element effective for securing wettability of the plating bath. The Ca content may also be 0%, but to obtain such an effect, the Ca content is preferably 0.01% or more. The Ca content may also be 0.05% or more, 0.1% or more, 0.5% or more, or 1.0% or more. On the other hand, if excessively containing Ca, a large amount of hard intermetallic compounds are formed in the plating layer, the plating layer becomes brittle, and the adhesion with the steel sheet is sometimes made to fall. Therefore, the Ca content is preferably 3.0% or less. The Ca content may also be 2.5% or less, 2.0% or less, or 1.5% or less.

[Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, and W: 0 to 0.500%]

Sb, Pb, Cu, Sn, Ti, Cr, Nb, Zr, Mn, Mo, Ag, Li, La, Ce, B, Y, Sr, In, Co, Bi, P, and W need not be contained in the plating layer but also may be present in the plating layer in amounts of 0.0001% or more, 0.001% or more, or 0.01% or more. These elements have no detrimental effects on the performance of the plated steel sheet if in predetermined ranges of content. However, if the contents of the elements are excessive, the corrosion resistance is sometimes made to fall. Therefore, the contents of Sb, Pb, La, Ce, B, Y, Sr, In, Co, Bi, P, and W are preferably 0.500% or less and, for example, may be 0.300% or less, 0.100% or less, or 0.050% or less. Similarly, the contents of Cu, Sn, Ti, Cr, Nb, Zr, Mn, Mo, Ag, and Li are preferably 1.000% or less and, for example, may also be 0.800% or less, 0.500% or less, or 0.100% or less.

In the plating layer, the balance besides the above elements is comprised of Zn and impurities. The "impurities" in the plating layer are constituents, etc., entering due to the raw materials first and foremost and various factors in the production process when producing plating layer.

### [Measurement of Chemical Composition of Plating Layer]

The chemical composition of the plating layer is determined in the following way. First, an acid aqueous solution containing an inhibitor suppressing the corrosion of the base steel sheet is used to peel off and dissolve the plating layer from the plated steel sheet. The obtained acid solution is measured by ICP (inductively coupled plasma spectrometry) to determine the chemical composition of the plating layer (average composition). The type of acid is not particularly limited and may be any acid able to dissolve the plating layer.

The plating layer may be any plating layer having the above chemical composition and having the following oxide layer on its surface and is not particularly limited, but for example it may also be a hot dip coated layer, alloyed hot dip coated layer, etc.

### [Amount of Deposition of Plating Layer: 20 g/m² or More Per Surface]

In an embodiment of the present invention, the amount of deposition of the plating layer is 20 g/m² or more per surface. In general, a plating layer becomes alloyed with the base steel sheet at the time of the high temperature heating of hot-stamp forming and sometimes the corrosion resistance falls. However, according to an embodiment of the present invention, while the reason is not necessarily clear, due to the surface layer part structure of the base steel sheet, i.e., the surface layer part structure with a depth with an area ratio of pearlite of 0 to 20% in the sheet thickness direction from the interface of the base steel sheet and plating layer of 3 to 100 µm and with an area ratio of pearlite with a circle equivalent diameter of 5 µm or more at the depth of 0 to 30%, it is believed possible to delay alloying between the plating layer and the base steel sheet. Therefore, by making the amount of deposition of the plating layer relatively large and specifically controlling it to 20 g/m² or more per surface, when used for hot-stamp forming, there will be a plating layer not sufficiently advanced in alloying. It is believed that due to the presence of such a plating layer, a sufficient corrosion resistance can be maintained. On the other hand, if the amount of deposition of the plating layer is small, the effect relating to the delay of alloying such as explained above cannot be sufficiently obtained and sometimes the corrosion resistance falls after hot-stamp forming. From the viewpoint of improvement of the corrosion resistance, the amount of deposition of the plating layer per surface is preferably 25 g/m² or more or 30 g/m² or more, more preferably 40 g/m² or more, still more preferably 50 g/m² or more, most preferably 60 g/m² or more. The upper limit is not particularly prescribed, but the amount of deposition of the plating layer may also be, for example, 200 g/m² or less, 180 g/m² or less, 170 g/m² or less, 160 g/m² or less, or 150 g/m² or less.

### [Measurement of Amount of Deposition of Plating]

The amount of deposition of the plating layer is determined in the following way. First, a 30 mm×30 mm sample is taken from the plated steel sheet. Next, an acid solution containing an inhibitor for suppressing corrosion of the base steel sheet is used to peel off and dissolve the plating layer from this sample. The amount of deposition of the plating layer is determined from the change in weight of the sample before and after peeling off and dissolving the plating layer. The type of acid is not particularly limited and may be any acid able to dissolve the plating layer.

### [Peak Intensity Ratio by XPS Measurement: (Al-O+Mg-O)/Zn-O≥3]

In an embodiment of the present invention, the plating layer has an oxide layer on its surface. If measuring the oxide layer by XPS (X-ray photoelectron spectroscopy), the peak intensity ratio of (Al-O+Mg-O)/Zn-O is 3 or more. Here, Al-O, Mg-O, and Zn-O respectively indicate the intensities of the peaks derived from the Al-O, Mg-O, and Zn-O bonds. For example, if using a conventional Zn-based plated steel sheet or Al-Zn-based plated steel sheet in hot-stamp forming, in general, the plated steel sheet is heated to about 900°C or a higher temperature in the hot-stamp forming. Zn has a boiling point of about 907°C or relatively low, therefore at such a high temperature, the Zn in the plating layer partially evaporates and sometimes the corrosion resistance falls after hot-stamp forming. Further, regarding the Mg added to the Zn-based plated steel sheet or Al-Zn-based plated steel sheet as well, part of it evaporates at the time of the high temperature heating at the hot-stamp forming and in the same way as the case of Zn, sometimes causes the corrosion resistance to fall after the hot-stamp forming. As opposed to this, Al oxides and Mg oxides are stronger and/or denser oxides compared with Zn oxides, therefore the surface of the plating layer is formed with an oxide layer with a peak intensity ratio of (Al-O+Mg-O)/Zn-O by XPS measurement of 3 or more, i.e., is the plating layer surface is covered by relatively large amounts of Al oxides and/or Mg oxides. Due to this, even when used for hot-stamp forming, it is possible to suppress or reduce the evaporation of Zn and/or Mg in the plating layer. Further, in relation to this, at the obtained hot-stamp formed body, it is possible to maintain the Zn and Mg concentrations at the plating layer relatively high as they are and relatively reduce the Fe concentration and possible to enhance the corrosion resistance after hot-stamp forming. From the viewpoint of further enhancing the corrosion resistance, the higher the peak intensity ratio of (Al-O+Mg-O)/Zn-O by XPS measurement, the more preferable. For example, it may be 5 or more, 8 or more, or 10 or more. The peak intensity ratio of (Al-O+Mg-O)/Zn-O by XPS measurement can be controlled to within a desired range by suitably adjusting the chemical composition of the plating layer in addition to control of the dew point at the time of cooling after plating explained in detail later in relation to the method of production of the hot-stamp formed body. For example, by making the chemical composition of the plating layer contain, by mass%, Al: 10.0 to 50.0% and Mg: 4.00 to 15.00%, it is possible to control the peak intensity ratio to 5 or more. Similarly, by the chemical composition of the plating layer made to contain, by mass%, Al: 30.0 to 50.0% and Mg: 7.00 to 15.00%, the peak intensity ratio can be controlled to 10 or more. The upper limit of the peak intensity is not particularly prescribed, but for example, the peak intensity ratio of (Al-O+Mg-O)/Zn-O by XPS measurement may be 20 or less, 18 or less, or 15 or less.

The measurement of the oxide layer at the plating layer surface by XPS is performed under the following conditions at positions of 5 nm in the sheet thickness direction from the surface of the plating layer:
X-ray source: mono-Al Kα(1486.6eV)
X-ray diameter: 50 to 200 µm
Measurement region: 100 to 700 µm×100 to 700 µm
Vacuum degree: 1×10^{- 1 0} to 1×10^{- 11} torr (1 torr: 133.32 Pa)
Acceleration voltage: 1 to 10 kV

Here, the peak derived from the Al-O bonds is a peak observed in the range of 72 to 76 eV in the XPS spectrum focusing on Al 2p3/2. The peak derived from the Mg-O bonds is the peak observed in the range of 48 to 52eV in the XPS spectrum focusing on Mg 2p3/2. The peak derived from the Zn-O bonds is the peak observed in the range of 1018 to 1024eV in the XPS spectrum focusing on Zn 2p3/2. The intensity of each peak is made the intensity Ip of the peak minus the intensity Ib of the baseline after considering the baseline of the peak (i.e., "Ip-Ib"). The value of (Al-O+Mg-O)/Zn-O is calculated based on the peak intensities obtained in this way.

### [Depth With Area Ratio of Pearlite of 0 to 20% in Sheet Thickness Direction From Interface of Base Steel Sheet and Plating Layer: 3 to 100 µm]

In an embodiment of the present invention, the depth with an area ratio of pearlite of 0 to 20% in the sheet thickness direction from the interface of the base steel sheet and plating layer is 3 to 100 µm. This feature is related to the lowering of the carbon concentration at the surface layer part of the base steel sheet. Therefore, by having this feature, it is possible to obtain the effect of suppression of LME by lowering the carbon concentration of the base steel sheet surface layer part and suppress or reduce the occurrence of LME cracking at the time of spot welding after hot-stamp forming. In addition, by reducing the amount of pearlite at the surface layer part of the steel sheet until within the above range, it is possible to reduce the amount of austenite transforming from pearlite at the time of the high temperature heating of hot-stamp forming. Therefore, this feature can be said to be an extremely important feature in preventing the formation of routes for recarburization by carbon due to the austenite running along the grain boundaries at the time of hot-stamp forming. From the viewpoint of further enhancing these effects, it is preferable to increase the regions at the surface layer part with little pearlite. More specifically, the depth with an area ratio of pearlite of 0 to 20% in the sheet thickness direction from the interface of the base steel sheet and plating layer is preferably 5 µm or more or 10 µm or more, more preferably 20 µm or more or 30 µm or more, most preferably 40 µm or more or 50 µm or more. The upper limit of the depth may also be, for example, 90 µm or 80 µm.

### [Area Ratio of Pearlite With Circle Equivalent Diameter of 5 µm or More at Depth With Area Ratio of Pearlite of 0 to 20% in Sheet Thickness Direction From Interface of Base Steel Sheet and Plating Layer: 0 to 30%]

In an embodiment of the present invention, the area ratio of pearlite with a circle equivalent diameter of 5 µm or more at a depth with an area ratio of pearlite of 0 to 20% in the sheet thickness direction from the interface of the base steel sheet and plating layer is 0 to 30%. By controlling the area ratio of pearlite with a circle equivalent diameter of 5 µm or more in a depth region with a relatively low area ratio of pearlite in the above way to a range of 0 to 30% to reduce the amount of relatively large pearlite, even at the time of the high temperature heating of hot-stamp forming, it is possible to secure the presence of austenite converted from pearlite dispersed on the grain boundaries and thereby reliably cut off the routes for recarburization by carbon due to the austenite. Therefore, by remarkably suppressing recarburization at the time of the high temperature heating in the hot-stamp forming, it becomes possible to sufficiently obtain the effects of suppression of LME due to lowering the carbon concentration at the initial base steel sheet surface part and thereby reliably suppress or reduce the occurrence of LME cracking at the time of subsequent spot welding. From the viewpoint of further improving such an effect, the area ratio of pearlite with a circle equivalent diameter of 5 µm or more at the depth with an area ratio of pearlite of 0 to 20% is preferably 25% or less or 20% or less, more preferably 15% or less or 12% or less, most preferably 10% or less or 8% or less. The lower limit of the area ratio of pearlite with a circle equivalent diameter of 5 µm or more is, for example, 1% or 3%.

### [Measurement of Depth with Area Ratio of Pearlite of 0 to 20% and Area Ratio of Pearlite With Circle Equivalent Diameter of 5 µm or More]

The depth with an area ratio of pearlite of 0 to 20% and the area ratio of the pearlite with a circle equivalent diameter of 5 µm or more in the microstructure at the surface layer part of the base steel sheet are determined in the following way. First, five samples are taken from the surface of the plated steel sheet so that the cross-section parallel to the rolling direction and sheet thickness direction can be examined. Next, these examined surfaces are polished to a mirror finish, corroded by a picral corrosive solution, then examined for structure using a scan electron microscope (SEM). The measurement range, for each sample, is made a rectangular range of 100 µm in the sheet thickness direction from the interface of the base steel sheet and plating layer and 500 µm in direction perpendicular to the sheet thickness direction as one field. A total of five fields are measured for the five samples. The interface of the base steel sheet and the plating layer can be judged by the difference in the color of the base steel sheet and plating layer in the backscattered electron image (BSE) of the SEM. Pearlite, for example, is calculated for area ratio from a structural photograph of a power of 5000X or so using the point count method. Here, regions surrounded by grain boundaries with a difference in crystal orientation of ferrite of 15° or more in which ferrite phases and cementite phases are mixed and the cementite is lamellar and/or spherical in form are found to be pearlite and their area ratio is calculated. For each sample, the depth position from the interface of the base steel sheet and the plating layer where the area ratio of pearlite gradually increases and becomes 20% is identified then the distance from the identified depth position to the interface is calculated. The arithmetic average of these is determined as the "depth with an area ratio of pearlite of 0 to 20% in the sheet thickness direction from the interface of the base steel sheet and plating layer". Similarly, for each sample, at the depth region from the interface with an area ratio of pearlite of 20%, image processing is used to calculate the area ratio of pearlite with a circle equivalent diameter of 5 µm or more. The arithmetic average of these is determined as the "area ratio of pearlite with a circle equivalent diameter of 5 µm or more at the depth with an area ratio of pearlite of 0 to 20% in the sheet thickness direction from the interface of the base steel sheet and plating layer".

### [Preferred Chemical Composition of Base Steel Sheet]

The present invention, as explained above, has as its object the provision of plated steel sheet maintaining high corrosion resistance while suppressing LME cracking even when used for hot-stamp forming. The object is achieved by making the amount of deposition of the plating layer 20 g/m² or more per surface, forming on the surface of the plating layer an oxide layer with a peak intensity ratio of (Al-O+Mg-O)/Zn-O by XPS measurement of 3 or more, and forming on the surface layer part of the base steel sheet a structure with a depth with an area ratio of pearlite of 0 to 20% in the sheet thickness direction from the interface of the base steel sheet and plating layer of 3 to 100 µm and with an area ratio of pearlite with a circle equivalent diameter of 5 µm or more at the depth with an area ratio of pearlite of 0 to 20% controlled to 0 to 30%. Therefore, the chemical composition itself of the base steel sheet clearly is not an essential technical feature in achieving the object of the present invention. Below, a preferred chemical composition of the base steel sheet used in the plated steel sheet according to an embodiment of the present invention will be explained in detail, but these explanations are intended only to illustrate the preferred chemical composition of the base steel sheet suitable to achieving a Vickers hardness of 400 HV or more in a body after hot-stamp forming and are not intended to limit the present invention to one using a base steel sheet having such a specific chemical composition.

In an embodiment of the present invention, for example, the base steel sheet preferably has a chemical composition comprising, by mass%,
C: 0.13 to 0.50%,
Si: 0.001 to 3.000%,
Mn: 0.30 to 3.00%,
Al: 0.0002 to 2.000%,
P: 0.100% or less,
S: 0.1000% or less,
N: 0.0100% or less,
Nb: 0 to 0.15%,
Ti: 0 to 0.15%,
V: 0 to 0.15%,
Mo: 0 to 1.0%,
Cr: 0 to 1.0%,
Cu: 0 to 1.0%,
Ni: 0 to 1.0%,
B: 0 to 0.0100%,
W: 0 to 1.000%,
Hf: 0 to 0.050%,
Mg: 0 to 0.050%,
Zr: 0 to 0.050%,
Ca: 0 to 0.010%,
REM: 0 to 0.30%,
Ir: 0 to 1.000%, and
balance: Fe and impurities.
Below, these elements will be explained in more detail.

### [C: 0.13 to 0.50%]

C is an element inexpensively making the tensile strength increase and is an important element for control of the strength of steel. To sufficiently obtain such an effect, the C content is preferably 0.13% or more. The C content may also be 0.15% or more, 0.20% or more, 0.30% or more, or 0.35% or more. On the other hand, if excessively containing C, a drop in elongation is sometimes invited. For this reason, the C content is preferably 0.50% or less. The C content may also be 0.45% or less or 0.40% or less.

### [Si: 0.001 to 3.000%]

Si is an element acting as a deoxidizer and suppressing precipitation of carbides in the cooling process in annealing of the cold rolled sheet. To sufficiently obtain such an effect, the Si content is preferably 0.001% or more. The Si content may also be 0.010% or more, 0.100% or more, or 0.200% or more. On the other hand, if excessively containing Si, sometimes an increase of steel strength and a drop in elongation are invited. For this reason, the Si content is preferably 3.000% or less. The Si content may also be 2.500% or less, 2.000% or less, 1.500% or less, or 1.000% or less.

### [Mn: 0.30 to 3.00%]

Mn is an element raising the hardenability of steel and an element effective for raising strength. To sufficiently obtain such an effect, the Mn content is preferably 0.30% or more. The Mn content may also be 0.50% or more, 1.00% or more, or 1.30% or more. On the other hand, if excessively containing Mn, sometimes an increase in steel strength and a drop in elongation are invited. For this reason, the Mn content is preferably 3.00% or less. The Mn content may also be 2.80% or less, 2.50% or less, or 2.00% or less.

### [Al: 0.0002 to 2.000%]

Al is an element acting as a deoxidizer of steel and having the action of making the steel sounder. To sufficiently obtain such an effect, the Al content is preferably 0.0002% or more. The Al content may also be 0.001% or more, 0.010% or more, 0.050% or more, or 0.100% or more. On the other hand, if excessively containing Al, sometimes coarse Al oxides are formed and the elongation of the steel sheet falls. For this reason, the Al content is preferably 2.000% or less. The Al content may also be 1.500% or less, 1.000% or less, 0.800% or less, or 0.500% or less.

### [P: 0.100% or Less]

P is an element segregating at the grain boundaries and promoting embrittlement of steel. The smaller the P content, the more preferable, therefore ideally the content is 0%. However, excessive reduction of the P content sometimes invites a large increase in production costs. For this reason, the P content may be 0.0001% or more and may also be 0.001% or more or 0.005% or more. On the other hand, if excessively containing P, as explained above, sometimes grain boundary segregation invites embrittlement of the steel. Therefore, the P content is preferably 0.100% or less. The P content may also be 0.050% or less, 0.030% or less, or 0.010% or less.

### [S: 0.1000% or Less]

S is an element forming MnS and other nonmetallic inclusions in steel and inviting a drop in ductility of the steel material part. The smaller the S content, the more preferable, therefore ideally it is 0%. However, excessive reduction of the S content sometimes invites a large increase in production costs. For this reason, the S content may be 0.0001% or more and may also be 0.0002% or more, 0.0010% or more, or 0.0050% or more. On the other hand, if excessively containing S, sometimes occurrence of cracking starting from the nonmetallic inclusion at the time of cold working is invited. Therefore, the S content is preferably 0.1000% or less. The S content is 0.0500% or less, 0.0200% or less, or 0.0100% or less.

### [N: 0.0100% or less]

N is an element forming coarse nitrides in the steel sheet and causing a drop in the workability of the steel sheet. The smaller the N content, the more preferable, therefore ideally the content is 0%. However, excessive reduction of the N content sometimes invites a large increase in production costs. For this reason, the N content may be 0.0001% or more and may also be 0.0005% or more or 0.0010% or more. On the other hand, if excessively containing N, as explained above, coarse nitrides are formed and sometimes the workability is made to fall. Therefore, the N content is preferably 0.0100% or less. The N content may also be 0.0080% or less or 0.0050% or less.

The preferred basic chemical composition of the base steel sheet is as explained above. Further, the base steel sheet may contain, in accordance with need, one or more elements selected from the group comprising Nb: 0 to 0.15%, Ti: 0 to 0.15%, V: 0 to 0.15%, Mo: 0 to 1.0%, Cr: 0 to 1.0%, Cu: 0 to 1.0%, Ni: 0 to 1.0%, B: 0 to 0.0100%, W: 0 to 1.000%, Hf: 0 to 0.050%, Mg: 0 to 0.050%, Zr: 0 to 0.050%, Ca: 0 to 0.010%, REM: 0 to 0.30%, and Ir: 0 to 1.000% in place of part of the balance of Fe. These elements may respectively be contained in 0.0001% or more, 0.0005% or more, 0.001% or more, or 0.01% or more.

In the base steel sheet, the balance besides the above elements is comprised of Fe and impurities. The "impurities" in the base steel sheet are constituents, etc., entering due to the ore, scrap, or other raw materials and other various factors in the production process when industrially producing the base steel sheet.

The chemical composition of the base steel sheet may be measured by a general analysis method. For example, the chemical composition of the base steel sheet may be measured by first removing the plating layer by mechanical polishing, then measuring the chips based on JIS G 1201: 2014 using inductively coupled plasma-atomic emission spectrometry (ICP-AES). Specifically, for example, a 35 mm square test piece is obtained from near the 1/2 position of the thickness of the base steel sheet and is measured by an ICPS-8100, etc. (measuring device) made by Shimadzu Corporation under conditions based on calibration curves prepared in advance to thereby identify the composition. C and S, which cannot be measured by ICP-AES, can be measured using the combustion-infrared absorption method, N can be measured using the inert gas melting-thermal conductivity method, and O can be measured using the inert gas melting-nondispersive type infrared absorption method.

### [Sheet Thickness of Base Steel Sheet]

The sheet thickness of the base steel sheet is not particularly limited, but, for example, is 0.2 mm or more and may also be 0.3 mm or more, 0.6 mm or more, 1.0 mm or more, or 2.0 mm or more. Similarly, the sheet thickness of the base steel sheet is, for example, 6.0 mm or less and may also be 5.0 mm or less or 4.0 mm or less.

### <Method of Production of Plated Steel Sheet>

Next, a preferable method of production of the plated steel sheet according to an embodiment of the present invention will be explained. The following explanation is intended to illustrate the characteristic method for production of the plated steel sheet according to an embodiment of the present invention and is not intended to limit the plated steel sheet to one produced by the method of production explained below.

The plated steel sheet according to an embodiment of the present invention can be produced, for example, by a casting step of casting molten steel adjusted in chemical composition to form a steel slab, a hot rolling step of hot rolling the steel slab to obtain a hot rolled steel sheet, a coiling step of coiling the hot rolled steel sheet, a cold rolling step of cold rolling the coiled hot rolled steel sheet to obtain a cold rolled steel sheet, an annealing step of annealing the cold rolled steel sheet, a cooling step of cooling the annealed cold rolled steel sheet, and a plating step of forming a plating layer on the obtained base steel sheet. Alternatively, it is also possible to not perform coiling after the hot rolling step, but to pickle then perform the cold rolling step as is. Below, the steps will be explained in detail.

### [Casting Step]

The conditions of the casting step are not particularly limited. For example, after smelting by a blast furnace, electric furnace, etc., various secondary refining operations are performed, then casting may be performed by the usual continuous casting, casting by the ingot method, or other method.

### [Hot Rolling Step]

The cast steel slab can be hot rolled to obtain a hot rolled steel sheet. The hot rolling step is performed by heating the cast steel slab directly or after cooling once, then reheating. If reheating, the heating temperature of the steel slab may be, for example, 1100 to 1250°C. In the hot rolling step, usually rough rolling and finish rolling are performed. The temperatures and rolling reductions of the rolling operations can be suitably determined in accordance with the desired metallostructure and sheet thickness. For example, the end temperature of the finish rolling may be 900 to 1050°C and the rolling reduction of the finish rolling may be 10 to 50%.

### [Coiling Step]

The hot rolled steel sheet can be coiled up at a predetermined temperature. The coiling temperature can be suitably determined in accordance with the desired metallostructure, etc. For example, it may be 500 to 800°C. Before coiling or after coiling, then uncoiling, the hot rolled steel sheet may be subjected to predetermined heat treatment. Alternatively, the coiling step need not be performed, but the steel sheet may be pickled after the hot rolling step and then the cold rolling step performed.

### [Cold Rolling Step]

The hot rolled steel sheet may be pickled, etc., then the hot rolled steel sheet may be cold rolled to obtain cold rolled steel sheet. The rolling reduction of the cold rolling can be suitably determined in accordance with the desired metallostructure and sheet thickness. For example, it may be 20 to 80%. After the cold rolling step, for example, the steel sheet may be air cooled to cool it down to room temperature.

### [Annealing Step]

Next, the obtained cold rolled steel sheet is annealed. The annealing step includes heating the cold rolled steel sheet in an atmosphere with a dew point of -20 to 10°C to 730 to 900°C in temperature and holding it there for 10 to 300 seconds. By performing the annealing step under such relatively high dew point conditions, it is possible to suitably decarburize the surface layer part of the cold rolled steel sheet. Therefore, in the finally obtained plated steel sheet, it becomes possible to control the depth with an area ratio of pearlite of 0 to 20% in the sheet thickness direction from the interface of the base steel sheet and plating layer to within a range of 3 to 100 µm. If the dew point is less than-20°C, the heating temperature is less than 730°C, and/or the holding time is less than 10 seconds, the decarburization at the surface layer part of the cold rolled steel sheet becomes insufficient. As a result, at the finally obtained plated steel sheet, it becomes no longer possible to make the depth with an area ratio of pearlite of 0 to 20% in the sheet thickness direction from the interface of the base steel sheet and plating layer 3 µm or more. On the other hand, if the dew point is more than 10°C, the heating temperature is more than 900°C, and/or the holding time is more than 300 seconds, sometimes the steel sheet surface is formed with an external oxide layer, the plateability falls, and excessive decarburization causes the finally obtained plated steel sheet to fall in strength. The dew point is preferably -10 to 5°C, more preferably -5 to 5°C. Further, the atmosphere at the annealing step may be a reducing atmosphere, more specifically a reducing atmosphere containing nitrogen and hydrogen, for example, a hydrogen 1 to 10% reducing atmosphere (for example, hydrogen 4% and nitrogen balance).

### [Cooling Step]

The cold rolled steel sheet with the surface layer part decarburized in the annealing step has to be suitably cooled in the next cooling step in order to obtain the desired surface layer part structure. Specifically, the cooling step includes cooling from the heating temperature of the annealing step to a control temperature of 620 to 670°C by an average cooling speed of 20°C/s or more (primary cooling) and cooling from the control temperature to the plating bath temperature (for example, melting point of plating bath+20°C) by an average cooling speed of 10°C/s or less (secondary cooling). Below, the primary cooling and secondary cooling will be explained in more detail.

### [Primary Cooling]

In the primary cooling, it is important to suppress precipitation of pearlite at a high temperature. Explained more specifically, pearlite precipitating at a high temperature of the 730 to 900°C heating temperature at the annealing step to the 620 to 670°C control temperature quickly disperses, therefore pearlite dispersed at the grain boundaries and running along the grain boundaries after precipitation is easily formed. The pearlite formed along the grain boundaries transforms to austenite at the time of the high temperature heating of the hot-stamp forming, therefore routes for recarburization of carbon are formed by the austenite running along the grain boundaries and recarburization by carbon in the bulk to the steel surface layer part is promoted. Therefore, in the temperature region from the heating temperature of the annealing step to the control temperature, it becomes extremely important to suppress precipitation of pearlite at a high temperature at the steel sheet surface layer part by cooling the cold rolled steel sheet by a relatively fast average cooling speed of 20°C/s or more. If the average cooling speed is less than 20°C/s and/or the control temperature is more than 670°C, pearlite precipitates at the fast dispersion high temperature, therefore formation of pearlite running along the grain boundaries is promoted. As a result, at the finally obtained plated steel sheet, the area ratio of pearlite with a circle equivalent diameter of 5 µm or more at the depth with an area ratio of pearlite of 0 to 20% in the sheet thickness direction from the interface of the base steel sheet and plating layer is more than 30% and, when used for hot-stamp forming, it becomes no longer possible to achieve a sufficient LME resistance at the time of subsequent spot welding.

### [Secondary Cooling]

On the other hand, in the secondary cooling after the primary cooling, making the pearlite precipitate at a low temperature where dispersion is relatively slow is important. More specifically, it is possible to make the pearlite precipitate by cooling from the 620 to 670°C control temperature to the plating bath temperature (for example, melting point of plating bath+20°C) by an average cooling speed of 10°C/s or less. Pearlite precipitating at such a control temperature or less low temperature region is relatively slow to disperse, therefore does not form strings along the grain boundaries. The pearlite can remain present dispersed on the grain boundaries. In the case of such a structure, even at the time of the high temperature heating in the hot-stamp forming, the austenite transformed from pearlite at the A_{c 1} point or more can similarly be made present dispersed on the grain boundaries, therefore the routes for recarburization of carbon by austenite can be reliably cut off. On the other hand, if the average cooling speed is more than 10°C/s and/or the control temperature is less than 620°C, not pearlite, but mainly martensite or bainite precipitates. In the finally obtained plated steel sheet, the depth with an area ratio of pearlite of 0 to 20% in the sheet thickness direction from the interface of the base steel sheet and plating layer can no longer be made 100 µm or less. Martensite and bainite are faster in speed of transformation to austenite compared with pearlite and immediately transform to austenite right above the A_{c 1} point. For this reason, compared with the case of pearlite, at the time of hot-stamp forming, the time exposed to a high temperature at the dual phase structure of ferrite and austenite becomes longer. In the same way as such a case, routes for recarburization become easily formed at the grain boundaries, therefore sufficient LME resistance can no longer be achieved.

### [Plating Step]

Next, in the plating step, a plating layer having the chemical composition explained above is formed at least at one surface and preferably both surfaces of the cold rolled steel sheet (base steel sheet). More specifically, the plating step is performed by hot dip coating using a plating bath adjusted in constituents so that the chemical composition of the plating layer becomes within the range explained above (plating bath temperature: for example 420 to 480°C). Alloying may be caused after the hot dip coating. Further, the plating treatment is not limited to hot dip coating and may also be performed by electroplating, vapor deposition plating, thermal spraying, cold spraying, etc. The other conditions of the plating step may be suitably set considering the thickness, amount of deposition, etc., of the plating layer. For example, by dipping the cold rolled steel sheet in a plating bath, then pulling it up and immediately blowing N₂ gas or air for gas wiping, then cooling, it is possible to adjust the amount of deposition of the plating layer to within a predetermined range, for example, to within a range of 20 to 200 g/m² per surface.

### [Cooling After Plating]

At the time of cooling after plating, it is necessary to control the dew point of the cooling gas (for example, nitrogen gas) to within a range of -10 to 10°C. By cooling the plated steel sheet in such a relatively high dew point atmosphere, it is possible to form an oxide layer containing relatively large amounts of Al oxides and Mg oxides on the surface of the plating layer, more specifically, possible to form an oxide layer with a peak intensity ratio of (Al-O+Mg-O)/Zn-O by XPS measurement of 3 or more. Due to the formation of such an oxide layer, even at the time of the high temperature heating of hot-stamp forming, it is possible to remarkably suppress or reduce the evaporation of Zn and/or Mg in the plating layer and, further, possible to make the Fe concentration at the plating layer of the obtained hot-stamp formed body relatively smaller. Therefore, it becomes possible to further improve the corrosion resistance after the hot-stamp forming. By suitably adjusting the chemical composition of the plating layer in addition to controlling the dew point of the cooling gas at the time of cooling after plating to a range of -10 to 10°C, it is possible to control the peak intensity ratio of (Al-O+Mg-O)/Zn-O by XPS measurement to within the desired range. For example, by making the chemical composition of the plating layer contain, by mass%, Al: 10.0 to 50.0% and Mg: 4.00 to 15.00% in addition to the above dew point control, it is possible to control the peak intensity ratio to 5 or more. Similarly, by making the chemical composition of the plating layer contain, by mass%, Al: 30.0 to 50.0% and Mg: 7.00 to 15.00%, it is possible to control the peak intensity ratio to 10 or more.

The plated steel sheet produced by the present method of production can have an amount of deposition of the plating layer of 20 g/m² or more per surface, can be formed at the surface of the plating layer with an oxide layer with a peak intensity ratio of (Al-O+Mg-O)/Zn-O by XPS measurement of 3 or more, and can have a structure with a depth with an area ratio of pearlite of 0 to 20% in the sheet thickness direction from the interface of the base steel sheet and plating layer of 3 to 100 µm and with an area ratio of pearlite with a circle equivalent diameter of 5 µm or more at the depth with an area ratio of pearlite of 0 to 20% controlled to 0 to 30% formed at the surface layer part of the base steel sheet. For this reason, even when exposed to a high temperature such as the time of hot-stamp forming, a high corrosion resistance can be maintained while recarburization at the steel surface layer part by carbon in the bulk can be remarkably suppressed and the effect of suppression of LME by lowering the carbon concentration of the initial base steel sheet surface layer part can be sufficiently obtained to thereby reliably suppress or reduce the occurrence of LME cracking at the time of subsequent spot welding. Therefore, according to such a plated steel sheet, when used as plated steel sheet for hot stamping, compared to conventional plated steel sheet, sufficient corrosion resistance is maintained and more excellent LME resistance can be realized. For this reason, longer service life in use as plated steel sheet for automobiles or building materials can be obtained and through this development of industry can be contributed to.

Below, examples will be used to explain the present invention in more detail, but the present invention is not limited to these examples in any way.

### EXAMPLES

In the following examples, plated steel sheets according to an embodiment of the present invention were produced under various conditions and the produced plated steel sheets were investigated for their properties.

First, for each sheet, molten steel was cast by the continuous casting method to form a steel slab having the chemical composition shown in Table 1. The steel slab was cooled once, then reheated to 1200°C and hot rolled, then was coiled up at a 600°C or less temperature. The hot rolling was performed by rough rolling and finish rolling. The end temperature of the finish rolling was 900 to 1050°C and the rolling reduction in the finish rolling was 30%. Next, the obtained hot rolled steel sheet was pickled, then was cold rolled by a rolling reduction of 50% to obtain a cold rolled steel sheet having a 1.6 mm sheet thickness. Next, the obtained cold rolled steel sheet was annealed in an oxygen concentration 20 ppm or less furnace in a mixed gas atmosphere of hydrogen 4% and a balance of nitrogen under the conditions shown in Table 2, then similarly was cooled under the conditions shown in Table 2 to produce a base steel sheet.

Next, the produced base steel sheet was cut to 100 mm×200 mm. A batch type hot dip coating test apparatus made by the Assignee was used to plate the base steel sheet. More specifically, first, the produced base steel sheet was dipped in a plating bath having a predetermined chemical composition for about 3 seconds, then this was pulled up by a speed of 20 to 200 mm/s and was wiped by N₂ gas to adjust the amount of deposition of the plating layer to the value shown in Table 2. Next, the base steel sheet with the plating layer deposited on it was cooled using, as the cooling gas, nitrogen gas controlled to the dew point shown in Table 2 from the plating bath temperature (about 420 to 480°C) to room temperature to obtain a plated steel sheet formed with a plating layer on the two surfaces of the base steel sheet. The sheet temperature was measured using a thermocouple spot welded to the center part of the base steel sheet.

The physical properties and features of the obtained plated steel sheets were measured and evaluated by the following methods:

### [Analysis of Chemical Composition of Plating Layer]

The chemical composition of the plating layer was determined by dipping a sample cut to 30 mm×30 mm in a 10% HCl aqueous solution containing an inhibitor, removing the plating layer by pickling, then measuring the plating constituents dissolved in the aqueous solution by ICP spectrometry. The results are shown in Table 2.

### [Evaluation of LME Resistance at Time of Spot Welding]

First, a plated steel sheet was loaded into a 900°C atmospheric heating furnace. After the temperature of the plated steel sheet reached the furnace inside temperature-10°C, the plated steel sheet was held there for 100 seconds. Next, the plated steel sheet was taken out from the furnace. The plated steel sheet was clamped between flat plate dies of a temperature of about room temperature to rapidly cool it. Two 50 mm×100 mm samples of the heated and rapidly cooled plated steel sheet were prepared. These two plated steel sheet samples were spot welded using dome radius type tip diameter 8 mm welding electrodes by a weld angle of 2°, squeeze force of 4.0kN, weld time of 0.5 second, and weld current of 12 kA to prepare a welded joint. Next, the length of an LME crack formed outside the shoulder of the weld zone was measured and the LME resistance was evaluated as follows:
AAA: 0 µm
AA: more than 0 to 20 µm
A: more than 20 µm to less than 80 µm
B: 80 µm or more

### [Evaluation of Corrosion Resistance]

The corrosion resistance of the plated steel sheet was evaluated in the following way. First, a plated steel sheet was loaded into a 900°C atmospheric heating furnace. After the temperature of the plated steel sheet reached the furnace inside temperature-10°C, the plated steel sheet was held there for 100 seconds. Next, the plated steel sheet was taken out from the furnace. The plated steel sheet was clamped between flat plate dies of a temperature of about room temperature to rapidly cool it. A 50 mm×100 mm sample of the heated and rapidly cooled plated steel sheet was treated by Zn phosphate (SD5350 System: Nippon Paint Industrial Coatings Co., Ltd. standard), then was coated by electrodeposition (PN110 Powernics Gray: Nippon Paint Industrial Coatings Co., Ltd. standard) to 20 µm and was baked at a temperature of 150°C for 20 minutes. Next, a cut was made at the center of the sample reaching the bottom iron (base steel sheet). Next, a combined cyclic corrosion test was performed in accordance with JASO (M609-91) to measure the number of cycles until red rust formed from the cut part. The corrosion resistance was evaluated in the following way.
AAA: more than 240 cycles
AA: 180 to 240 cycles
A: 90 to less than 180 cycles
B: less than 90 cycles

### [Evaluation of Hardness]

First, in the same way as the case of evaluation of the corrosion resistance, a test piece was cut out so that a cross-section vertical to the surface (sheet thickness cross-section) could be examined from any position of the heated and rapidly cooled plated steel sheet other than the end parts. The sheet thickness cross-section of the test piece was polished using #600 to #1500 silicon carbide paper, then was finished to a mirror surface using a liquid of particle size 1 to 6 µm diamond powder dispersed in alcohol or other diluent or pure water. That sheet thickness cross-section was made the measured surface. Next, a micro-Vickers hardness tester was used to measure the Vickers hardness by a load of 1 kgf at intervals of 3 times or more the indentations. A total of 20 points were randomly measured near the sheet thickness 1/2 position of the base steel sheet so as not to include the surface layer part lowered in carbon concentration. The arithmetic average of these was determined as the hardness after hot stamping (HS) and was evaluated in the following way.
AAA: hardness after HS of more than 550 HV
AA: hardness after HS of more than 500 to 550 HV
A: hardness after HS of 400 to 500 HV
B: hardness after HS of less than 400 HV

Cases where the LME resistance was evaluated as AAA, AA, and A and the corrosion resistance was evaluated as AAA, AA, and A were evaluated as plated steel sheet maintaining high corrosion resistance even when used for hot-stamp forming while able to suppress LME cracking at the time of spot welding after hot-stamp forming. The results are shown in Table 2.

### [Table 1]

**Table 1**

| Steel type | Chemical composition (mass%), balance: Fe and impurities | | | | | | |
|---|---|---|---|---|---|---|---|
| | C | Si | Mn | Al | P | S | N |
| A | 0.20 | 0.012 | 1.23 | 0.030 | 0.005 | 0.0020 | 0.0030 |
| B | 0.30 | 0.220 | 1.70 | 0.030 | 0.005 | 0.0020 | 0.0030 |
| C | 0.40 | 0.200 | 1.30 | 0.030 | 0.005 | 0.0020 | 0.0030 |
| D | 0.50 | 0.200 | 1.30 | 0.030 | 0.005 | 0.0020 | 0.0030 |

### [Table 2-1]

**Table 2-1**

| No. | Class | Steel type | Production conditions | | | | | | |
|---|---|---|---|---|---|---|---|---|---|
| | | | Annealing step | | | Cooling step | | | Cooling gas after plating |
| | | | Dew point (°C) | Heating temp. T1 (°C) | Holding time (s) | T1→T2 average cooling temp. (°C/s) | Control temp. T2 (°C) | T2→plating bath temp. average cooling speed (°C/s) | Dew point (°C) |
| 1 | Ex. | A | 0 | 800 | 10 | 20 | 650 | 10 | -10 |
| 2 | Ex. | B | 0 | 800 | 15 | 20 | 650 | 10 | 0 |
| 3 | Ex. | A | 0 | 800 | 60 | 20 | 620 | 10 | 0 |
| 4 | Ex. | A | 0 | 800 | 60 | 20 | 650 | 10 | 0 |
| 5 | Ex. | A | 0 | 800 | 60 | 20 | 650 | 10 | 0 |
| 6 | Ex. | A | 0 | 800 | 60 | 20 | 650 | 10 | 0 |
| 7 | Ex. | B | 0 | 800 | 60 | 20 | 650 | 10 | 0 |
| 8 | Ex. | B | 0 | 800 | 60 | 30 | 650 | 10 | 0 |
| 9 | Ex. | B | 0 | 800 | 80 | 30 | 650 | 10 | 0 |
| 10 | Ex. | C | 0 | 800 | 100 | 30 | 670 | 5 | 0 |
| 11 | Ex. | C | 0 | 800 | 100 | 30 | 650 | 5 | 0 |
| 12 | Ex. | D | 0 | 800 | 100 | 30 | 650 | 5 | 0 |
| 13 | Ex. | A | 0 | 800 | 120 | 30 | 650 | 10 | 0 |
| 14 | Ex. | A | 0 | 800 | 120 | 30 | 650 | 10 | 0 |
| 15 | Ex. | A | 0 | 800 | 120 | 30 | 650 | 10 | 0 |
| 16 | Ex. | A | 0 | 800 | 120 | 30 | 650 | 10 | 0 |
| 17 | Ex. | A | 0 | 800 | 120 | 30 | 650 | 10 | 0 |
| 18 | Ex. | A | 0 | 800 | 120 | 30 | 650 | 10 | 0 |
| 19 | Ex. | A | 0 | 800 | 140 | 30 | 650 | 10 | 0 |
| 20 | Ex. | A | 0 | 800 | 140 | 30 | 650 | 10 | 0 |
| 21 | Ex. | A | 0 | 800 | 170 | 30 | 650 | 10 | 0 |
| 22 | Ex. | B | 0 | 900 | 210 | 30 | 650 | 10 | 0 |
| 23 | Ex. | B | 0 | 850 | 22 | 30 | 650 | 10 | 0 |
| 24 | Ex. | B | 0 | 800 | 230 | 30 | 650 | 10 | 0 |
| 25 | Ex. | B | 0 | 800 | 240 | 30 | 650 | 10 | 0 |
| 26 | Ex. | B | 0 | 800 | 220 | 30 | 650 | 10 | 0 |
| 27 | Ex. | B | 0 | 730 | 210 | 30 | 650 | 10 | 0 |
| 28 | Ex. | C | 0 | 800 | 300 | 30 | 650 | 5 | 0 |
| 29 | Ex. | C | 0 | 800 | 300 | 30 | 650 | 5 | 0 |
| 30 | Ex. | C | 0 | 800 | 300 | 30 | 650 | 5 | 0 |
| 31 | Ex. | D | 0 | 800 | 300 | 30 | 650 | 5 | 0 |
| 32 | Ex. | D | 0 | 800 | 300 | 30 | 650 | 5 | 0 |
| 33 | Ex. | B | 0 | 800 | 220 | 30 | 620 | 10 | 0 |
| 34 | Ex. | B | 0 | 800 | 220 | 30 | 670 | 10 | 0 |
| 35 | Comp. ex. | A | 0 | **715** | 120 | 20 | 650 | 5 | **-40** |
| 36 | Comp. ex. | A | 0 | 800 | **8** | 20 | 650 | 5 | 0 |
| 37 | Comp. ex. | A | **-30** | 800 | 100 | 20 | 650 | 5 | 0 |
| 38 | Comp. ex. | A | 0 | 800 | 100 | **15** | 650 | 5 | 0 |
| 39 | Comp. ex. | A | 0 | 800 | 100 | 20 | **700** | 5 | 0 |
| 40 | Comp. ex. | A | 0 | 800 | 100 | 20 | **600** | 5 | 0 |
| 41 | Comp. ex. | A | 0 | 800 | 10 | 20 | 650 | **13** | 0 |
| 42 | Comp. ex. | A | 0 | 800 | 220 | 30 | 620 | 10 | **-15** |

### [Table 2-2]

**Table 2-2**

| No. | Class | Cross-sectional structure of base steel sheet | | Plating layer | | | | | | | | Peak intensity ratio of oxide layer by XPS | Performance | | |
|---|---|---|---|---|---|---|---|---|---|---|---|---|---|---|---|
| | | Pearlite area ratio 0 to 20% depth (µm) | Circle equiv. dia. 5 µm or more pearlite area ratio (%) | Chemical composition (mass%), balance: Zn and impurities | | | | | | | Amount of deposition (g/m²) | | Hardness after HS | LME resistance | Corrosion resistance |
| | | | | Zn | Al | Mg | Si | Ca | Fe | Others | | | | | |
| 1 | Ex. | 3 | 30 | Bal. | 0.5 | 0.50 | 0 | 0.0 | 0 | | 20 | 3 | A | A | A |
| 2 | Ex. | 8 | 25 | Bal. | 1.5 | 1.50 | 0.2 | 0.0 | 0.1 | Ni:0.0004 | 50 | 4 | AA | A | A |
| 3 | Ex. | 10 | 25 | Bal. | 1.5 | 2.00 | 0.2 | 0.0 | 0.1 | Y:0.0002 | 52 | 3 | AAA | A | A |
| 4 | Ex. | 11 | 21 | Bal. | 3.0 | 2.00 | 0.2 | 0.0 | 0.1 | Nb:0.001 | 66 | 3 | AAA | AA | A |
| 5 | Ex. | 11 | 23 | Bal. | 6.0 | 3.00 | 0.2 | 0.0 | 0.1 | Zr:0.001 | 120 | 4 | AAA | AA | A |
| 6 | Ex. | 12 | 19 | Bal. | 100 | 4.00 | 0.4 | 0.1 | 0.1 | In:0.001 | 45 | 5 | AAA | AA | AA |
| 7 | Ex. | 13 | 17 | Bal. | 15.0 | 6.00 | 0.6 | 0.2 | 0.5 | Mg:0.001 | 43 | 7 | AAA | AA | AA |
| 8 | Ex. | 12 | 14 | Bal. | 24.9 | 6.70 | 0.6 | 1.1 | 0.7 | | 44 | 8 | AAA | AA | AA |
| 9 | Ex. | 19 | 15 | Bal. | 30.0 | 7.00 | 0.8 | 0.5 | 0.6 | | 90 | 10 | AAA | AA | AAA |
| 10 | Ex. | 22 | 13 | Bal. | 39.8 | 7.60 | 0.9 | 0.0 | 1.7 | Cu:0.001 | 51 | 12 | AAA | AA | AAA |
| 11 | Ex. | 25 | 13 | Bal. | 45.3 | 11.80 | 0.6 | 1.0 | 2.6 | Cr:0.005 | 20 | 14 | AAA | AA | AAA |
| 12 | Ex. | 29 | 11 | Bal. | 50.0 | 15.00 | 4.0 | 2.0 | 2.2 | | 39 | 17 | AAA | AA | AAA |
| 13 | Ex. | 30 | 10 | Bal. | 0.5 | 0.50 | 0.2 | 0.0 | 0.1 | | 90 | 3 | AAA | AAA | A |
| 14 | Ex. | 33 | 8 | Bal. | 1.5 | 1.90 | 0.2 | 0.0 | 0.1 | Mo:0.0005 | 55 | 3 | AAA | AAA | A |
| 15 | Ex. | 31 | 7 | Bal. | 3.3 | 3.00 | 0.2 | 0.0 | 0.1 | Mn:0.02 | 69 | 4 | AAA | AAA | A |
| 16 | Ex. | 33 | 7 | Bal. | 11.2 | 4.00 | 0.2 | 0.0 | 0.1 | | 60 | 5 | AAA | AAA | AA |
| 17 | Ex. | 40 | 8 | Bal. | 20.1 | 7.50 | 0.4 | 0.1 | 0.3 | | 71 | 8 | AAA | AAA | AA |
| 18 | Ex. | 50 | 8 | Bal. | 30.5 | 8.80 | 0.6 | 1.9 | 0.4 | | 75 | 14 | AAA | AAA | AAA |
| 19 | Ex. | 61 | 9 | Bal. | 30.0 | 10.20 | 0.8 | 1.0 | 0.6 | Co:0.001 | 81 | 14 | AAA | AAA | AAA |
| 20 | Ex. | 82 | 8 | Bal. | 46.9 | 8.10 | 2.0 | 0.3 | 1.6 | Ag:0.001 | 50 | 15 | AAA | AAA | AAA |
| 21 | Ex. | 99 | 8 | Bal. | 0.5 | 0.60 | 0.2 | 0.0 | 0.1 | Pb:0.004 | 24 | 3 | AAA | AAA | A |
| 22 | Ex. | 100 | 7 | Bal. | 2.2 | 1.90 | 0.2 | 0.0 | 0.1 | | 69 | 4 | AAA | AAA | A |
| 23 | Ex. | 60 | 9 | Bal. | 6.0 | 3.10 | 0.2 | 0.0 | 0.1 | | 70 | 3 | AAA | AAA | A |
| 24 | Ex. | 35 | 6 | Bal. | 12.5 | 4.50 | 0.2 | 0.0 | 0.4 | | 89 | 6 | AAA | AAA | AA |
| 25 | Ex. | 37 | 7 | Bal. | 12.0 | 5.00 | 0.2 | 0.0 | 0.5 | Bi:0.004, P:0.001 | 99 | 7 | AAA | AAA | AA |
| 26 | Ex. | 34 | 8 | Bal. | 19.0 | 6.60 | 0.2 | 0.0 | 0.8 | Sn:0.01 | 71 | 8 | AAA | AAA | AA |
| 27 | Ex. | 55 | 6 | Bal. | 24.5 | 6.00 | 0.7 | 0.2 | 1.1 | B:0.009 | 76 | 9 | AAA | AAA | AA |
| 28 | Ex. | 43 | 8 | Bal. | 34.0 | 8.90 | 0.8 | 0.3 | 1.2 | Sr:0.01 | 76 | 11 | AAA | AAA | AAA |
| 29 | Ex. | 35 | 9 | Bal. | 39.0 | 10.10 | 1.1 | 0.9 | 3.4 | W:0.002 | 89 | 10 | AAA | AAA | AAA |
| 30 | Ex. | 35 | 6 | Bal. | 46.0 | 9.90 | 1.2 | 0.0 | 4.3 | Ce:0.005 | 44 | 13 | AAA | AAA | AAA |
| 31 | Ex. | 41 | 15 | Bal. | 48.0 | 8.90 | 1.7 | 0.1 | 4.4 | Li:0.01, Ti:0.04 | 50 | 16 | AAA | AAA | AAA |
| 32 | Ex. | 35 | 7 | Bal. | 50.0 | 7.20 | 3.5 | 0.2 | 5.5 | La:0.003 | 39 | 17 | AAA | AAA | AAA |
| 33 | Ex. | 31 | 7 | Bal. | 19.0 | 6.50 | 0.2 | 0.0 | 0.8 | | 69 | 8 | AAA | AAA | AA |
| 34 | Ex. | 36 | 9 | Bal. | 19.0 | 6.60 | 0.2 | 0.0 | 0.8 | | 67 | 8 | AAA | AAA | AA |
| 35 | Comp. ex. | **0** | 24 | Bal. | 4.0 | 2.00 | 0.2 | 0.0 | 0.1 | | 51 | 2 | A | B | B |
| 36 | Comp. ex. | 2 | 23 | Bal. | 4.0 | 2.00 | 0.2 | 0.0 | 0.1 | | 55 | 4 | A | B | A |
| 37 | Comp. ex. | 2 | 14 | Bal. | 4.0 | 2.00 | 0.2 | 0.0 | 0.1 | | 50 | 3 | A | B | A |
| 38 | Comp. ex. | 22 | **36** | Bal. | 4.0 | 2.00 | 0.2 | 0.0 | 0.1 | | 49 | 4 | A | B | A |
| 39 | Comp. ex. | 15 | **50** | Bal. | 4.0 | 2.00 | 0.2 | 0.0 | 0.1 | | 51 | 3 | A | B | A |
| 40 | Comp. ex. | **>100** | 0 | Bal. | 4.0 | 2.00 | 0.2 | 0.0 | 0.1 | | 57 | 4 | A | B | A |
| 41 | Comp. ex. | **>100** | 0 | Bal. | 4.0 | 2.00 | 0 | 0.0 | 0 | | 59 | 4 | A | B | A |
| 42 | Comp. ex. | 31 | 8 | Bal. | 2.0 | 1.00 | 0.0 | 0.0 | 0.9 | | 56 | **2** | AAA | AAA | B |

Referring to Table 2, in Comparative Example 35, the heating temperature of the annealing step was low, therefore it is believed the decarburization at the surface layer part of the cold rolled steel sheet was insufficient. As a result, the depth with an area ratio of pearlite of 0 to 20% in the sheet thickness direction from the interface of the base steel sheet and plating layer could not be made 3 µm or more and the LME resistance fell. In Comparative Example 36, the holding time at the annealing step was short, therefore it is believed the decarburization at the surface layer part of the cold rolled steel sheet was insufficient and similarly the depth with an area ratio of pearlite of 0 to 20% could not be made 3 µm or more and the LME resistance fell. In Comparative Example 37, the dew point of the annealing step was low, therefore it is believed that the decarburization at the surface layer part of the cold rolled steel sheet was insufficient and, similarly, the depth with an area ratio of pearlite of 0 to 20% could not be made 3 µm or more and the LME resistance fell. In Comparative Example 38, the average cooling speed of the primary cooling at the cooling step was low, therefore it is believed that pearlite precipitated at a high temperature and this formed along the grain boundaries. As a result, the area ratio of pearlite with a circle equivalent diameter of 5 µm or more at the depth with an area ratio of pearlite of 0 to 20% in the sheet thickness direction from the interface of the base steel sheet and plating layer exceeded 30% and the LME resistance fell. In Comparative Example 39, the control temperature of the primary cooling at the cooling step was high, therefore it is believed that pearlite precipitated at a high temperature and this formed along the grain boundaries and, similarly, the area ratio of pearlite with a circle equivalent diameter of 5 µm or more at the depth with an area ratio of pearlite of 0 to 20% exceeded 30% and the LME resistance fell. In Comparative Example 40, the control temperature of the secondary cooling at the cooling step was low, therefore not pearlite, but bainite mainly precipitated. As a result, the depth with an area ratio of pearlite of 0 to 20% in the sheet thickness direction from the interface of the base steel sheet and plating layer could not be made the desired depth and the LME resistance fell. In Comparative Example 41, the average cooling speed of the secondary cooling at the cooling step was fast, therefore not pearlite, but bainite mainly precipitated and similarly the depth with an area ratio of pearlite of 0 to 20% could not be made the desired depth and the LME resistance fell. Further, in each of Comparative Examples 35 and 42, the dew point of the cooling gas after plating was low, therefore it was not possible to form the desired oxide layer at the surface of the plating layer. As a result, the peak intensity ratio of (Al-O+Mg-O)/Zn-O by XPS measurement became less than 3 and the corrosion resistance.

In contrast to this, each of the plated steel sheets according to all of the examples had the predetermined plating chemical composition, had an amount of deposition of the plating layer of 20 g/m² or more per surface, had an oxide layer formed at the surface of the plating layer with a peak intensity ratio of (Al-O+Mg-O)/Zn-O by XPS measurement of 3 or more, had a depth with an area ratio of pearlite of 0 to 20% in the sheet thickness direction from the interface of the base steel sheet and plating layer of 3 to 100 µm while had an area ratio of pearlite with a circle equivalent diameter of 5 µm or more at the depth with an area ratio of pearlite of 0 to 20% controlled to 0 to 30%, whereby even if used for hot-stamp forming, it was possible to maintain a high corrosion resistance while sufficiently obtaining the effect of suppression of LME by lowering the carbon concentration of the initial base steel sheet surface layer part to thereby reliably suppress or reduce the occurrence of LME cracking at the time of subsequent spot welding. In particular, in each of Examples 13 to 34 with the depth with an area ratio of pearlite of 0 to 20% made 30 to 100 µm while with the area ratio of pearlite with a circle equivalent diameter of 5 µm or more at the depth controlled to 0 to 15%, the LME resistance was evaluated as AAA and the LME resistance was improved much more. In addition, in each of Examples 6 to 8, 16, 17, 24 to 27, 33, and 34 with the Al and Mg contents in the plating layer of respectively 10.0 mass% or more and 4.00 mass% or more and with the peak intensity ratio of (Al-O+Mg-O)/Zn-O by XPS measurement of 5 or more, the corrosion resistance was evaluated as AA. Compared with Example 1, etc., with the corrosion resistance evaluated as A, the corrosion resistance could be further improved. Similarly, in each of Examples 9 to 12, 18 to 20, and 28 to 32 with the Al and Mg contents in the plating layer of respectively 30.0 mass% or more and 7.00 mass% or more and with the peak intensity ratio of (Al-O+Mg-O)/Zn-O by XPS measurement of 10 or more, the corrosion resistance was evaluated as AAA and the corrosion resistance could be further improved.

## Claims

1. A plated steel sheet comprising a base steel sheet and a plating layer formed on a surface of the base steel sheet, wherein
the plating layer has a chemical composition comprising, by mass%,
Al: 0.5 to 50.0%,
Mg: 0.50 to 15.00%,
Si: 0 to 4.0%, and
Fe: 0 to 15.0%,
further comprising at least one of
Ni: 0 to 1.000%,
Ca: 0 to 3.0%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%, and
W: 0 to 0.500% in a total of 5.000% or less, and
balance: Zn and impurities,
a depth with an area ratio of pearlite of 0 to 20% in a sheet thickness direction from an interface of the base steel sheet and the plating layer is 3 to 100 µm,
an area ratio of pearlite with a circle equivalent diameter of 5 µm or more at a depth with an area ratio of pearlite of 0 to 20% is 0 to 30%,
an amount of deposition of the plating layer is 20 g/m² or more per surface, and
the plating layer has an oxide layer on its surface, and when the oxide layer is measured by XPS, a peak intensity ratio of (Al-O+Mg-O)/Zn-O is 3 or more,
where Al-O, Mg-O, and Zn-O indicate intensities of peaks derived from Al-O, Mg-O, and Zn-O bonds, respectively.

2. The plated steel sheet according to claim 1, wherein the depth with an area ratio of pearlite of 0 to 20% is 10 to 100 µm.

3. The plated steel sheet according to claim 2, wherein the depth with an area ratio of pearlite of 0 to 20% is 30 to 100 µm.

4. The plated steel sheet according to any one of claims 1 to 3, wherein the area ratio of pearlite with a circle equivalent diameter of 5 µm or more at a depth with an area ratio of pearlite of 0 to 20% is 0 to 15%.

5. The plated steel sheet according to any one of claims 1 to 3, wherein the chemical composition comprises, by mass%, Al: 10.0 to 50.0% and Mg: 4.00 to 15.00%, and the peak intensity ratio of (Al-O+Mg-O)/Zn-O is 5 or more.

6. The plated steel sheet according to claim 5, wherein the chemical composition comprises, by mass%, Al: 30.0 to 50.0% and Mg: 7.00 to 15.00%, and the peak intensity ratio of (Al-O+Mg-O)/Zn-O is 10 or more.
